(19) Europäisches Patentamt / European Patent Office / Office européen des brevets

(11) **EP 3 334 067 B1**

(12) **EUROPEAN PATENT SPECIFICATION**

(45) Date of publication and mention
of the grant of the patent:
**02.10.2019 Bulletin 2019/40**

(51) Int Cl.:
**H04J 3/06** *(2006.01)*          **H04L 12/26** *(2006.01)*
**H04L 12/841** *(2013.01)*

(21) Application number: **16306659.0**

(22) Date of filing: **12.12.2016**

(54) **SYNCHRONIZATION DEVICE AND SYSTEM FOR COMMUNICATION NETWORKS**

SYNCHRONISIERUNGSVORRICHTUNG UND -SYSTEM FÜR KOMMUNIKATIONSNETZWERKE

PROCÉDÉ, DISPOSITIF ET SYSTÈME DE SYNCHRONISATION DE RÉSEAUX DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.06.2018 Bulletin 2018/24**

(73) Proprietor: **Alcatel Lucent**
**91620 Nozay (FR)**

(72) Inventors:
• **GEMELLI, Riccardo**
**20871 Vimercate (MB) (IT)**
• **CORBETTA, Giuliano**
**20871 Vimercate (MB) (IT)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
WO-A1-2015/127983     US-A1- 2010 020 909
US-A1- 2010 158 051     US-A1- 2011 044 357

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present disclosure generally relates to the field of communication networks. In particular, the present disclosure relates to a synchronization device and system for communication networks.

**Background art**

As known, communication networks comprise several apparatuses having respective clocks. In order to guarantee proper functioning of the network, the clocks of the apparatuses need to be reciprocally synchronized.

The IEEE standard 1588-2008 "Precision Clock Synchronization Protocol for Networked Measurement and Control Systems" defines mechanisms which are used in many application areas, from automation to communication networks. For instance, in communication networks it may be used to synchronize UMTS/LTE base stations of TDD (Time Division Duplex) type. In particular, the IEEE-1588 defines protocol (based on the "Two Way Time Transfer" method), formats and functional architecture of clocks in a network.

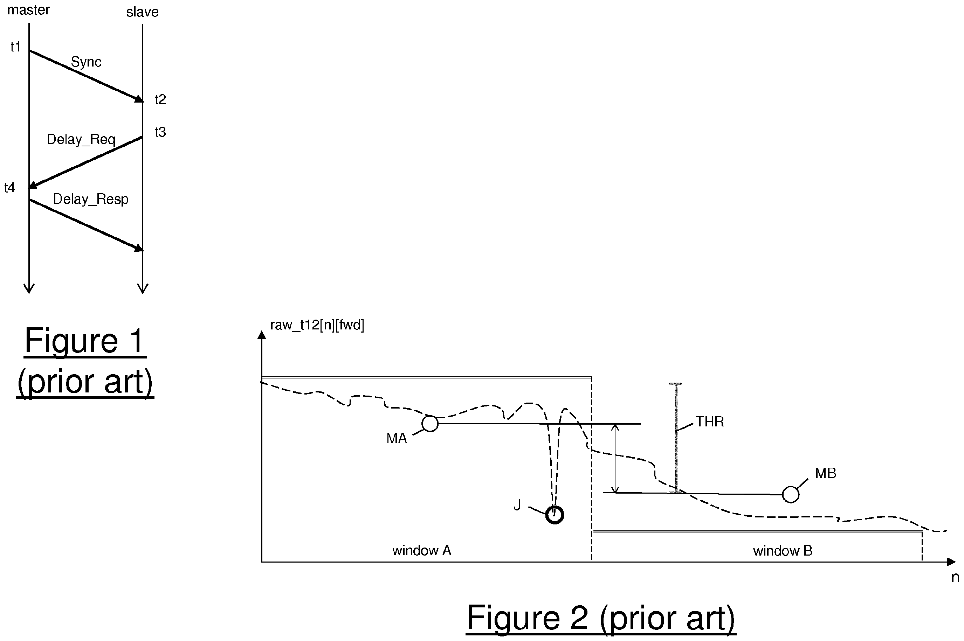

The "Two Way Time Transfer" is based on an exchange of synchronization packets between a master node providing a master clock and a slave node having a slave clock to be synchronized to the master clock. With reference to Figure 1, the master node periodically sends a Sync packet to the slave node (forward direction), comprising its own transmission time t1 as provided by its master clock. The slave node stores the reception time t2 of the Sync packet as provided by its slave clock. Then, upon reception of each Sync packet, the slave node sends back to the master node (backward direction) a Delay_Req packet and stores its transmission time t3 as provided by its slave clock. The master node then stores the reception time t4 of the Delay_Req packet as provided by its master clock, and sends it to the slave node in a Delay_Resp packet.

At each exchange of synchronization packets, therefore, the slave node is provided with four timestamps (t1 and t2 relating to forward packet, and t3 and t4 relating to backward packet) which it processes at synchronization purposes.

In a frequency synchronization process (also termed "syntonization"), for the $n^{th}$ pair of exchanged synchronization packets, slave clock timestamps t2[n] and t3[3] are related to the master clock timestamp t1[n] and t4[n] by the following expressions:

$$t2[n] = t1[n] + Tofwd[n] + \Delta fwd[n] - CFfwd[n]$$

$$t4[n] = t3[n] - Tobwd[n] + \Delta bwd[n] - CFbwd[n]$$

where for the $n^{th}$ synchronization packet pair:

- CFfwd[n] and CFbw[n] are the Correction Field values foreseen by the IEEE-1588 standard, in order to optionally report the accumulated residence time in the network for the synchronization packets. These values are taken into account by the slave clock by adding them the value of timestamps t1[n] and t3[n], therefore are not relevant to the next description;

- $\Delta fwd[n]$ and $\Delta bwd[n]$ represent the overall propagation delays for the synchronization packets for the forward and backward directions, that this the time they take to go from master clock to slave clock and *vice versa.* Such values are actually the sum of a constant term $\Delta fwd'$ or $\Delta bwd'$ (which represents the minimal propagation delay between master and slave clock, corresponding to the physical path followed by synchronization packets) and a variable and positive term $\Delta fwd''[n]$ and $\Delta bwd''[n]$, also known as Packet Delay Variation (PDV) noise (which represents variable and positive delays experienced in the communication network by synchronization packets, because of buffer queueing and other packet processing delays);

- Tofwd[n] and Tobwd[n] represent the values of the time offset between the master and slave clocks at the time of reception and transmission of synchronization packet by the slave. Such values are actually the sum of a constant term To', which represents the initial time offset between master and slave clock (i.e. the difference in the running timestamps at the start of the synchronization process), and a variable term Tofwd''[n] and Tobwd''[n], which is related to the time offset value produced by the sum over the time of the difference between master and slave clock frequency, namely:

$$Tofwd[n] = To' + Tofwd''[n]$$

$$Tbwd[n] = To' + Tobwd''[n]$$

Since the value of To' is actually unknown by the slave node, its value needs to be "cancelled" the above equations, by considering the timestamps of a previous pair of synchronization packets with index $n_{old}<n$, typically in the order of 1 to 2 seconds before the time at which the $n^{th}$ packet pair is exchanged, in the following differences:

$$raw\_t12[n][fwd]= (t2[n]–t2[n_{old}])–(t1[n]-t1[n_{old}]) \qquad [1a]$$

$$raw\_t12[n][bwd]= (t4[n]–t4[n_{old}])–(t3[n]-t3[n_{old}]) \qquad [1b]$$

that are calculated at the slave node for each $n^{th}$ pair of forward and backward packets exchanged with the master node.
Replacing in equations [1a] and [1b] the values of t2[n] and t4[n] as provided by the above equations, it derives:

$$raw\_t12[n][fwd] = (t1[n]+To'+Tofwd''[n]+\Delta fwd[n]) -$$

$$(t1[n_{old}]+ To'+Tofwd''[n_{old}]+\Delta fwd[n_{old}]) - (t1[n]-t1[n_{old}]) =$$

$$= (Tofwd''[n] - Tofwd''[n_{old}]) + (\Delta fwd[n] - \Delta fwd[n_{old}]) \qquad [1c]$$

$$raw\_t12[n][bwd] = (t3[n]-To'-Tobwd''[n]+\Delta bwd[n]) -$$

$$(t3[n_{old}]- To'-Tobwd''[n_{old}]+\Delta bwd[n_{old}]) - (t3[n]-t3[n_{old}]) =$$

$$= (-Tobwd''[n] + Tobwd''[n_{old}]) + (\Delta bwd[n] - \Delta bwd[n_{old}]) \qquad [1d]$$

Basically, equations [1c] and [1d] show that the propagation delays raw_t12[n][fwd] and raw_t12[n][bwd] are the sum of two contributions:

- a first contribution equal to $(Tofwd''[n] - Tofwd''[n_{old}])$ or $(-Tobwd''[n] + Tobwd''[n_{old}])$, which is related to the variation of the time offset component due to the frequency error in the interval between the $n^{th}$ packet pair and the previous pair with index $n_{old}$, and
- a second contribution equal to $(\Delta fwd[n] - \Delta fwd[n_{old}])$ or $(\Delta bwd[n] - \Delta bwd[n_{old}])$, which accounts for the variation of the overall propagation delays of the $n^{th}$ forward packet and the $n^{th}$ backward packet, respectively, against the overall propagation delays experienced by previous pair of synchronization packets with index $n_{old}$.

By considering the typical condition of full syntonization of the slave clock to the master clock, it is expected to not have on average any frequency error/time offset and then the first term can be considered as negligible. The propagation delays raw_t12[n][fwd] and raw_t12[n][bwd] in the syntonization condition are indeed influenced only by variation of the related overall propagation delay, especially for the case of variation of the minimal propagation delay (which can happen because of change in the physical path).
The latter statement can be enforced by the consideration that any not detected variation of the minimal propagation delay (also termed "jump" herein after) will be interpreted as a variation of the time offset between the master and the slave clock. This justifies the naming of "propagation delay variation" or propagation delay for simplicity to the values raw_t12[n][fwd] and raw_t12[n][bwd].
It shall also be noticed that the values raw_t12[n][fwd] and raw_t12[n][bwd] in syntonization conditions and with stable propagation delays (this is granted for instance if propagation delay is the minimum), represent the effect of PDV noise, so that they can be used in PDV noise estimation. The PDV noise estimation can be represented by the standard deviation of the propagation delay samples or derivations of them. In addition, notice that it is equivalent, apart the use of different constants for scaling, to use the variance in place of the standard deviation. This may be convenient for implementation to speed up calculation and reduce code footprint, since square roots calculation is avoided. Thus in following description, the use words standard deviation and variance is equivalent.

On the other side, in order to remove the PDV noise contribution, the slave clock is supposed to adopt suitable criteria for the selection of the synchronization packets to be used for syntonization, e.g. the selection of the packets corresponding to the minimal observed propagation delay.

Typically, the propagation delay variation samples (in the following for simplicity named only as "samples") raw_t12[n][fwd] and raw_t12[n][bwd] are grouped in not-overlapping windows of size Wn (typical value Wn=256), independently for forward and backward direction, in order to find within each window the "best" subset of Wb samples (typically Wb=0.1*Wn) with the minimal values: these value will be also the ones with the lowest propagation delay because of the assumption concerning the positivity of the PDV contribution.

Then, for each window, statistics (such as median, mean, minimum and variance) are computed for this "best" subset. Such statistics are representative values needed to estimate and validate that the values raw_t12[n][fwd] and raw_t12[n][bwd] within the same window were related to synchronization packets experiencing the same minimal propagation delay (even in presence of PDV noise).

Besides, at the slave node the syntonization process requires to compute the variation of the time offset over intervals much longer than the typical 2 seconds of max distance between n and $n_{old}$. This is typically done by selecting according to a defined criteria, e.g. the minimum propagation time described above, a forward reference packet and a backward reference packet, whose propagation delay variations are raw_t12[REF][fwd] and raw_t12[REF][bwd], respectively.

Then at the slave node, for each window with index m, a pair of forward and backward packets exchanged with the master node are selected from the last window in each direction according to a defined criteria, e.g. the minimum propagation delay, and phase errors are calculated relative to the reference packets, as follows:

$$PE[m][fwd]=raw\_t12[m][fwd]-raw\_t12[REF][fwd] \qquad [2a]$$

$$PE[m][bwd]=raw\_t12[m][bwd]-raw\_t12[REF][bwd] \qquad [2b]$$

A straightforward application of equations [1c] and [1d] to equation [2a] and [2b] shows that also the value of phase error is sensitive to change of the minimum propagation delays Δfwd' or Δbwd' between the packets selected from window with index m and the reference packets.

The phase errors PE[m][fwd] and PE[m][bwd] are then typically merged and processed for providing a control signal for the DPLL (Digital Phase Control Loop) of the slave node in order to synchronize the slave clock frequency to the master clock one.

Since variation of minimum propagation delay in real communication network may have magnitude of several hundreds of microseconds, or even several milliseconds, if such variation is not detected its impact on the phase error computed according to equations [2a] and [2b] can heavily affect the frequency recovery of the slave clock.

The IEEE-1588 frequency recovery algorithm therefore needs to estimate phase error accumulated over several windows having the same propagation delay. To this purpose, at the slave node typically a jump detector is implemented, which is configured to identify jumps (namely, sudden and sharp variations) of the propagation delay in the sequence of samples. Propagation delays are typically subjected to PDV noise, which the jump detector shall be capable of handling.

Typically, a known jump detector detects jumps by looking at proper indicators derived from the sample sequence. Such indicators are typically obtained by suitably filtering the samples, to remove the PDV noise contribution. As indicator, the median of the "best" subset of each window may be used. An IIR filter is then applied to the medians, that typically operates on 20 consecutive windows. Then, each filtered median is compared with the previously calculated one and, if their difference exceeds a threshold, then a jump is detected.

A variance filter outside the jump detector typically calculates the variance of each "best" subset for each window. If the variance exceeds a certain maximum threshold, a congestion condition is inferred and no jump detection is performed on the corresponding window.

Ilija Hadžic et al. "A Synchronization Algorithm for Packet MANs", IEEE Transactions On Communications, vol. 59, no. 4, April 2011 describes a clock recovery algorithm suitable for synchronization over a packet-based metro-area network (MAN) using the Precision Time Protocol (PTP). The algorithm consists of a packet-based phase error estimator and a phase-locked loop (PLL). The loop is augmented with a jump detector that detects discontinuities in the packet arrival process due to route or network load changes, and a congestion detector that filters out unusable samples.

US 2010/158051 A1 discloses an endpoint or other communication device of a communication system including a clock recovery module. The communication device is operative as a slave device relative to another communication device that is operative as a master device. The clock recovery module comprises a clock recovery loop configured to control a slave clock frequency of the slave device so as to synchronize the slave clock frequency with a master clock frequency of the master device. The clock recovery loop utilizes a frequency error estimator implemented as a maximum-likelihood estimator with slope fitting based on a sequence of arrival timestamps, and a loop filter implemented as a series combination of an adaptive-bandwidth filter and a proportional-integral controller. The clock recovery module may further comprise a discontinuity detector configured to detect a discontinuity in delays of respective timing messages, and a loop controller operative to place the clock recovery loop in a particular state responsive to detection of the discontinuity.

WO 2015/127983 A1 discloses a method for synchronizing a client clock of a network node to a reference clock, wherein the network node performs the steps of receiving from the reference clock synchronization data, determining a comparison value indicative of a degree of deviation of the client clock with respect to the reference clock, and determining a synchronization state (S1, S2) out of a free running state (S1) and a locked state (S2), based on the comparison value, a first threshold (TH1), and a second threshold (TH2).

## Summary of the disclosure

The inventors have noticed that phase errors measured by applying equations 2[a] and 2[b] have three main contributors, and each type of contribution must be recognized and handled in a different manner.

A first type of phase error contribution is due to drifts of the frequency of the master clock. Since master clocks are typically very stable by definition, their frequency typically drifts slowly and the consequent small phase error measured by the slave is easily not detected as jump by the slave clock. Hence, phase errors of this type may be typically recovered by the slow DPLL (Digital Phase Lock Loop) dynamic of the synchronization system implemented at the slave node.

A second type of phase error contribution is due to drifts of the slave local reference oscillator (also termed herein after "OCXO" even if it stands for any kind of local oscillator) that feeds the DPLL and outputs the slave frequency that is used to provide timestamps t2[n] and t3[n]. The effect of this drift can be seen as a "distortion" of the local temporal axis, which produces a phase error drift that can be interpreted as a jump. Phase errors of this type have to be properly managed, that is they shall not be detected as jumps, the phase error computed by applying equations [2a] and [2b] shall be fed the DPLL to adjust the local clock.

The third type of phase error contribution is due to the above cited jumps, namely sudden and sharp variations in the sequence of propagation delay variation samples caused by variation of minimum propagation delays of synchronization packets. A jump typically occurs between an initial state and a final state, which are typically affected by a certain amount of PDV noise, which could itself be mistaken as false jumps. While true jumps shall be cancelled so that the DPLL dynamic is not negatively affected, false jumps due to noise shall be ignored (they will be filtered by selection criteria and the DPLL itself).

The inventors have noticed that jump detection in a wireless communication network is very critical, due to a number of reasons.

First of all, jumps induced by modulation changes or load changes at one or more network apparatuses on the path between master clock and slave clock typically are not seen by the slave clock as "clean" step functions, but they are typically affected from a significant PDV noise that can be of the same order of magnitude as the jump itself. Rather than a step function, such jumps may be better represented as saw tooth functions changing their average level. Hence, detection of such jumps on a threshold base as described above is not reliable.

Moreover, also the amount of PDV noise strongly depends on parameters of the radio link, such as channel space and the modulation scheme. In particular, in case of ACM (Adaptive Coding Modulation) modulation changes can happen dynamically due to weather condition changes, and experimentally has been proved that those changes can span from very short time interval (milliseconds) to minutes.

This implies that a jump detector has to tackle not only with jumps of the variable size, but also with the variable level of PDV noise.

Besides, setting a threshold for discriminating true jumps from noise may be difficult, since jumps between ACM levels are not constant. Moreover, the path between master clock and slave clock can cross multiple radio links (each one working with a different modulation) possibly of different vendors (i.e. with different characteristics).

Moreover, fast jump detection and accurate jump detection are difficult to achieve at the same time. In particular, a more precise and reliable jump detection and the capability of recognizing small jumps require a time consuming processing. This disadvantageously implies a slow intervention time, which may be dangerous and lead to a complete loss of the syntonization of the slave clock to the master clock if, in the meanwhile, the phase error grows too much.

Finally, it shall be noticed that avoiding "false" jumps is nearly as important as not missing "true" jumps. "False" jumps, if taken, may cause corrective actions that increases the phase error instead of decreasing it.

The inventors have realized that the clock recovery algorithm known from Ilija Hadzic et al. "A Synchronization Algorithm for Packet MANs", IEEE Transactions On Communications, vol. 59, no. 4, April 2011 is not suitable at the purpose of detecting jumps in the context of wireless communication networks, where variations of the propagation delays are particularly fast and relevant.

This is schematically depicted in Figure 2.

Figure 2 shows exemplary propagation delay samples raw_t12[n][fwd], exhibiting a jump J. As described above, a known jump detector divides the samples in consecutive windows (A and B in Figure 2) of 256 samples each, and then for each window calculates a filtered median MA, MB as described above. It may be appreciated that, disadvantageously, the jump J has a negligible impact on the median value MA. Then, upon calculation of the filtered median MB, the difference |MB-MA| is calculated and compared with the threshold TH. Since |MB-MA|<TH, no jump is detected. Hence, disadvantageously, a known jump detector is not capable of detecting the jump J, which accordingly will contribute to increase the phase error and likely results a complete loss of the syntonization of the slave node.

In view of the above, it is an object of the present disclosure to provide a synchronization device and system for a communication network, which solves the above drawbacks.

In particular, it is an object of the present disclosure to provide a synchronization device and system for a communication network, which is particularly efficient to discriminate true jumps (due to propagation delay changes) from false jumps (due to noise) when true jumps and noise have the same order of magnitude, as it typically occurs e.g. in wireless communication networks.

In the description the IEEE-1588 algorithm, in case of slave clock (also named as ordinary clock slave), as per IEEE-1588 standard, is referred. The invention is equally applicable to the case of boundary clocks (BC).

Moreover in the description the non-limiting example of IIR (Infinite Impulse Response) digital filters is used but in the invention also other types of digital filters may be used.

According to a first aspect, the present disclosure provides a synchronization device for a communication network, the synchronization device comprising:

- a noise estimator and dynamic threshold calculator block configured to estimate a noise affecting a sequence of propagation delay samples obtained from timestamps relating to synchronization packets exchanged with a master node of the communication network, and to calculate a threshold based on the estimated noise; and
- a jump detector configured to detect, based on the threshold, one or more jumps in the sequence of propagation delay samples. Wherein the jump detector is configured to:

  - divide the sequence of propagation delay samples in windows of Wn samples;
  - extract, from each one of the windows, a respective subset of Wb propagation samples, comprising the Wb lower propagation delay values in the window;
  - calculate a median of the Wb extracted propagation delay samples and filter the median by means of a filter;
  - detect a jump by processing a variation of the output of the filter.

According to an embodiment (first embodiment), the jump detector is configured to detect a jump if a squared variation of the output of the filter between current calculation and previous calculation is higher than the threshold.

According to another embodiment (third embodiment), the jump detector is configured to detect a jump if a squared variation of the output of the filter between current calculation and $T_C^{th}$ preceding calculation is higher than the threshold, $T_C$ being equal to a length of the filter.

According to this embodiment, the synchronization device further comprises a detrender block suitable for cooperating with said jump detector, said detrender block being configured to estimate a drift component in said sequence of propagation delay samples and remove it from an input of said jump detector.

According to these embodiments, the noise estimator and dynamic threshold calculator block is configured with an initialization value of the threshold, the initialization value being higher than a minimum jump detectable by the jump detector. The noise estimator takes a value that does not start from an initialization value but is simply the result of the estimation.

Preferably, the noise estimator and dynamic threshold calculator block is configured to prevent the threshold from falling underneath a minimum value.

Preferably, the noise estimator and dynamic threshold calculator block is configured to provide a noise estimation as a variance of medians of the Wb extracted propagation delay samples, calculated for a number $N_{slow}$ of consecutive windows.

Preferably, the noise estimator and dynamic threshold calculator block is configured to calculate the threshold by filtering the noise estimation by a filter capable of alternatively applying a faster time constant and slower time constant, wherein:

- if a current noise estimation is larger than a previous noise estimation, the filter applies the faster time constant; and
- if a current noise estimation is lower than a previous noise estimation, the filter applies the slower time constant.

According to another embodiment (second embodiment), the jump detector is configured to:

- divide the sequence of propagation delay samples in windows of Wn samples;
- further divide the propagation delay samples of two consecutive windows in a number of sub-windows of size Ws;
- calculate the mean of the Ws propagation delay samples comprised in each sub-window;
- detect jumps occurring in any one of the two consecutive windows by processing the calculated means for the sub-windows.

According to a first variant of this embodiment, the jump detector is configured to detect jumps by:

- calculating a linear regression of the means calculated for all the sub-windows of the two consecutive windows;
- calculating, for each sub-window, an error as a difference between the mean calculated for that sub-window and the linear regression calculated for that sub-window;
- calculating a number of sign changes of the error calculated over all the sub-windows;
- determining, amongst said calculated errors, a maximum error as the one having maximum absolute value and calculate its square; and
- detecting a jump if the number of sign changes is lower than a maximum allowed number of sign changes and if the squared maximum error is higher than the threshold.

According to a second variant of the second embodiment, the jump detector is configured to detect jumps by:

- determining a step function approximating the means calculated for the sub-windows, the step function being made by a set of M values $C_k$ (k=1, 2, ... M);
- calculating the difference between each possible pair of values $C_k$ and $C_j$ of the step function (j=1, 2, ... M and $j \neq k$); and
- detecting a jump if at least one of the calculated differences is higher than the threshold.

According to the second embodiment, the noise estimator and dynamic threshold calculator block is configured with an initialization value of the threshold, which is higher than a minimum jump detectable by the jump detector.

Preferably, the noise estimator and dynamic threshold calculator block is configured to set the threshold to the initialization value when a jump is detected.

Preferably, the noise estimator and dynamic threshold calculator block is further configured to estimate the noise on the two consecutive windows, propagation delay samples of a second window of the two consecutive window being considered only if no jump is detected.

Preferably, the noise estimator and dynamic threshold calculator block is further configured to calculate the threshold by filtering the estimated noise by a filter capable of alternatively applying any one of a faster time constant and a slower time constant, wherein:

- when a currently estimated noise is larger than a previously estimated noise, the faster time constant is applied by the filter so that said threshold is increased faster; and
- when a currently estimated noise is lower than a previously estimated noise, the slower time constant is applied by the filter so that said noise is decreased more slowly.

According to a second aspect, the present disclosure provides a synchronization system for a communication network, the synchronization system comprising:

- a phase comparator and packet selection criteria block configured to receive timestamps relating to synchronization packets exchanged with a master node of the communication network and to process them thereby providing a sequence of propagation delay samples relating to the synchronization packets;
- a first synchronization device according to the first embodiment set forth above;
- a second synchronization device according to the second embodiment set forth above; and
- a third synchronization device according to the second embodiment set forth above.

The synchronization system further comprises a control block configured to coordinate the first synchronization device, the second synchronization device and the third synchronization device, the first synchronization device and the second synchronization device having a priority higher than the third synchronization device.

**Brief description of the drawings**

Embodiments of the disclosure will be better understood by reading the following detailed description, given by way of example and not of limitation, to be read with reference to the accompanying drawings, wherein:

- Figure 1 (described above) schematically shows the known "Two Way Time Transfer" method provided by the IEEE-1588;
- Figure 2 (described above) schematically shows an exemplary sequence of propagation delay samples exhibiting a jump undetected by a known jump detector;
- Figure 3 schematically shows a synchronization system according to embodiments of the present disclosure;
- Figure 4 schematically shows a synchronization system according to another embodiment of the present disclosure;
- Figure 5 is a flow chart of the operation of the jump detector shown in Figure 3 according to an embodiment of the present disclosure;
- Figure 6 are two graphs showing the operation of the jump detector according to the flow chart of Figure 5;
- Figure 7 is a flow chart of the operation of the jump detector shown in Figure 3 according to an embodiment of the present disclosure;
- Figure 8 are two graphs showing the operation of the jump detector according to the flow chart of Figure 7; and
- Figure 9 is a flow chart of the operation of the jump detector shown in Figure 3 according to an embodiment of the present disclosure.

**Detailed description of preferred embodiments of the disclosure**

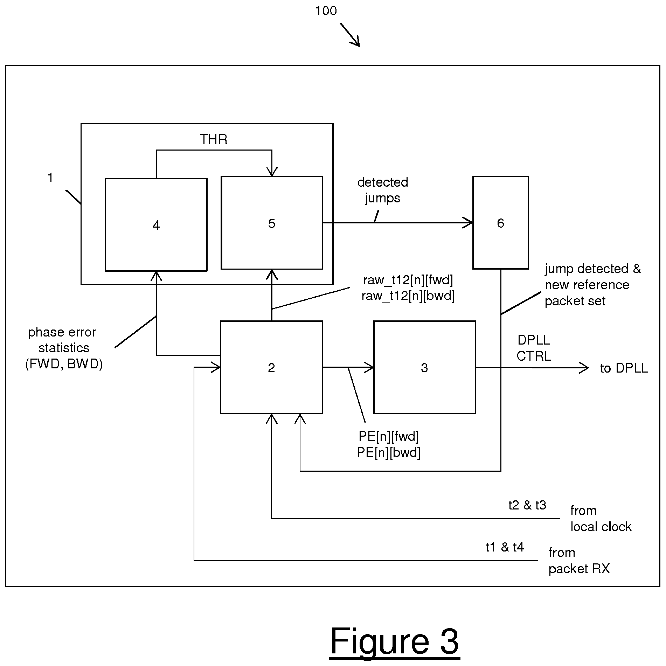

Figure 3 schematically shows a synchronization system 100 according to embodiments of the present disclosure.

The synchronization system 100 is suitable for being implemented at a slave node in order to perform the "Two Way Time Transfer" method described by the IEEE-1588 and summarized above. This allows the slave node synchronizing its local clock (slave clock) to a master clock received from a master node. The slave node preferably is a network apparatus of a communication network, for instance a radio apparatus of a wireless communication network.

The synchronization system 100 preferably comprises: a phase comparator and packet selection criteria block 2, a path merge and PLL update block 3, a synchronization device 1 - in turn comprising a noise estimator and dynamic threshold calculator block 4 -, a jump detector 5 and a control block 6.

The synchronization system 100 comprises further blocks (DPLL, packet TX and packet RX, etc.) which are not shown in Figure 1 and will not be described in detail since they are not relevant to the present description.

The phase comparator and packet selection criteria block 2 is configured to receive from a packet receiver of the system 1 (not shown in Figure 1) the timestamps t1 and t4 extracted from the forward synchronization packets (e.g. Sync packets and Delay_Resp packets) received from an apparatus providing a master clock. The block 2 is also configured to receive the timestamps t2 and t3 locally generated by the local slave clock of the system 1 (not shown in Figure 1), which indicate the reception times of the forward synchronization packets (e.g. Sync packets) and transmission times of the backward synchronization packets (e.g. Delay_Req packets).

The block 2 is also preferably configured to process such timestamps to provide the propagation delay samples raw_t12[n][fwd] and raw_t12[n][bwd] as per equations [1a] and [1b] above, select forward reference packet and backward reference packet, and then calculate phase errors PE[n][fwd] and PE[n][bwd] for both the forward and the backward direction, relative to the selected reference packets, according to equations [2a] and [2b] above.

The block 2 is also preferably configured to process the phase errors PE[n][fwd] and PE[n][bwd] in a known way to provide phase error statistics for both the forward and the backward direction.

The path merge and PLL update block 3 is configured to receive the phase errors PE[n][fwd] and PE[n][bwd], merge them and process them in a known way to provide a control signal for the DPLL of the synchronization system 1 (not shown in Figure 1).

The noise estimator and dynamic threshold calculator block 4 of the synchronization device 1 is preferably configured to receive from block 2 the phase error statistics for both the forward and the backward direction and to process them for measuring the noise affecting the propagation delay samples raw_t12[n][fwd] and raw_t12[n][bwd] calculated by the block 2

Besides, based on the estimated noise, the block 4 preferably determines and dynamically adjusts a dynamic threshold THR for each propagation direction, which the jump detector 5 will then use in order to properly discriminate true jumps from noise.

This way, in any working condition (namely, in any noise condition), the jump detector 5 is advantageously capable of detecting true jumps and, at the same time, rejecting false jumps due to noise, as it will be described in detail herein after.

The jump detector 5 is configured to receive the value of the dynamic threshold THR as output by the block 4 and to use it for detecting possible jumps in each sequence of propagation delay samples raw_t12[n][fwd] and raw_t12[n][bwd] calculated by the block 2, as it will be described in detail herein after.

As a jump is detected, the jump detector 5 is preferably configured to send a corresponding notification to the control block 6.

The control block 6 is in turn configured to receive jump detection notifications from the jump detector 5. Upon reception of a jump notification, the control block 6 is configured to restart the jump detector 5 and to trigger the block 2 to select new forward and backward reference packets to be used for the calculation of the phase errors PE[n][fwd] and PE[n][bwd].

It shall be noticed that the jump detection operates independently for each propagation direction. If a jump is detected e.g. in the backward direction, this does not imply that also the other direction has experienced a jump at the same time. Moreover, this ensures more robustness because one leg can survive the other if subject to more favorable PDV.

## First embodiment: fast jump detector

According to a first embodiment, at the purpose of detecting jumps, for each propagation direction, the jump detector 5 is preferably configured to divide the propagation delay samples in windows of Wn samples. Wn may be equal e.g. to 256.

Then jump detector 5 then preferably extracts, from each window, a subset of Wb samples, as those having the lowest propagation delay values. Wb may be equal to 0.1*Wn. The jump detector 5 then preferably calculates a median of the Wb selected samples and filters it by means of an IIR filter for removing noise.

The jump detector 5 then preferably compares the filtered median with the previously calculated one and compares it with the dynamic threshold THR received from the block 2. In particular, the jump detector 5 uses the squared variation output of the IIR filter between current calculation and previous calculation, that has the dimensions of a variance, and compares it with the dynamic threshold THR. If the dynamic threshold THR is overcome, then a jump is detected.

According to this first embodiment, the noise is preferably estimated by the block 4 as the standard deviation (or in an equivalent manner as the variance) of the medians of the best Wb propagation delay samples raw_t12[n][fwd] and raw_t12[n][bwd] of a window (a more detailed description of the noise estimation and threshold calculation performed by the block 4 will be provided herein below in connection with the third embodiment). The noise estimation is performed, independently, in both the forward and backward directions. The noise estimated in this way is the PDV noise estimation. As mentioned above, indeed, the noise estimation shall be carried out without being affected by jumps.

## Second embodiment (first variant): fast regressive jump detector

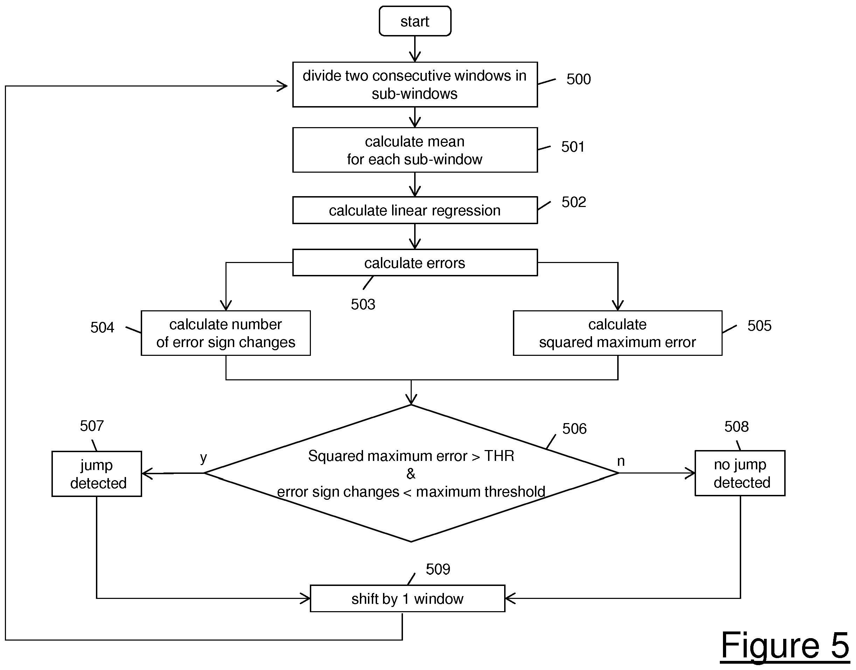

According to the second embodiment, the jump detector 5 is configured to detect jumps occurring at the boundary between consecutive windows. At this purpose, for each propagation direction the jump detector 5 is configured to operate on pairs of consecutive windows, as it will be described in detail herein after with reference to the flow chart of Figure 5.

First of all, the jump detector 5 preferably divides the propagation samples of two consecutive windows in a number of sub-windows of size Ws (step 500). Hence, if Wn is the number of samples per window, the number of sub-windows is 2Wn/Ws. If Wn=256, Ws may be equal e.g. to 32, thereby providing 16 sub-windows.

Then, for each sub-window, the jump detector 5 preferably calculates the mean of the Ws propagation delay samples comprised in the sub-window (step 501).

Then, the jump detector 5 preferably calculates a linear regression of the means calculated for all the sub-windows (step 502). The linear regression is calculated in a known way. Such linear regression basically is a representation of the propagation delay transition to be identified as a jump or not, in order to filter out the noise as much as possible.

The jump detector 5 also preferably calculates, for each sub-window, an error as a difference between the mean value of that sub-window and the linear regression in that sub-window (step 503).

The jump detector 5 also preferably calculates the number of sign changes of the errors calculated at step 503 over all the sub-windows (step 504).

Besides, the jump detector 5 preferably determines, amongst the errors calculated at step 503, the one having maximum absolute value and calculates its square (step 505). It shall be noticed that the squared maximum error has the dimensions of a variance of the propagation delay.

Then, the jump detector 5 preferably compares the number of sign changes provided at step 504 with a maximum threshold and the squared maximum error provided at step 505 with the dynamic threshold THR received from the block 4 (step 506).

If the number of sign changes is lower than the maximum threshold and the squared maximum error is higher than the dynamic threshold THR, then a jump is detected (step 507). Otherwise, if at least one of the above conditions is not satisfied, no jump is detected (step 508).

The reason of checking the first condition on the number of error sign changes, in order to detect a jump or not, is the following. The inventors have experimentally found that a jump typically may exhibit a number of error sign changes, but this number is typically limited, otherwise the behavior approximates noise. Checking that the number of error sign changes does not exceed the maximum threshold (which may be set depending on the application) advantageously allows avoiding taking noise for a jump.

The above steps 500-508 are preferably periodically iterated. At each iteration, a shifting by 1 window is perform (step 509), so as to consider the boundary between each pair of two consecutive windows. This way, possible jumps occurring close to the boundary between two consecutive windows are advantageously detected by the jump detector 5.

Therefore, the jump detector 5 according to the second embodiment has a slightly decreased sensitivity in comparison to the jump detector 5 according to the first embodiment (due to use of the linear regression line as a reference) but, on the other hand, it is advantageously able to detect all the jumps occurring at the boundary between consecutive time windows.

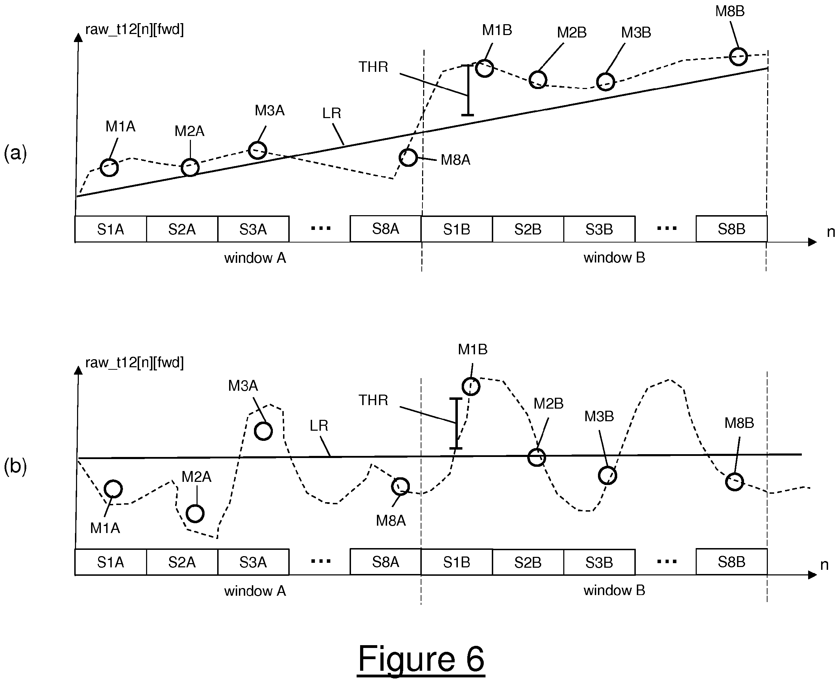

Figure 6 shows two exemplary propagation delay samples raw_t12[n][fwd], upon which the jump detector 5 operates according to the second embodiment. The samples are divided into two consecutive windows A and B, and each window is in turn divided in a number of (8, by way of non limiting example) sub-windows S1A, S2A, ... S8A and S1B, S2B, ... S8B as described above. For each sub-window, the mean M1A, M2A, ... M8A and M1B, M2B, ... M8B of the samples comprised therein is calculated. A linear regression LR is then calculated for the means of the two windows A and B.

In the upper graph (a), it is shown that the error between the means and their linear regression LR has a maximum (absolute value) in sub-window S1B. It is also shown that the error has two sign changes over the two windows A and B. The dynamic threshold THR is also schematically depicted in the graph. Since the squared maximum error is larger than THR and the number of error sign changes is lower than the maximum threshold, the jump detector 5 advantageously detects the jump occurring at the boundary between the two windows A and B.

In the lower graph (b), it is instead shown that the error between the means and their linear regression LR has a maximum (absolute value) in sub-window S1B, but error has several sign changes over the two windows A and B. The dynamic threshold THR is also schematically depicted in the graph. Hence, although the squared maximum error is larger than THR, the number of error sign changes exceeds the maximum threshold, and hence the jump detector 5 advantageously does not detect any false jump.

As to the calculation of the dynamic threshold THR, the block 4 is preferably configured with an initialization value $THR_0$' of the dynamic threshold THR, which is preferably higher than the minimum jump detectable by the jump detector 5. Preferably, the minimum detection capability of the jump detector 5 is set equal to $6*\sigma$, where $\sigma$ is the standard deviation of the means of the samples of each sub-window (36*variance, if variance equivalently used). This, under the assumption of Gaussian noise, represents the minimum distance between two stable levels of propagation delay, characterized by the same PDV noise level, at which samples of each stable level do not overlap with the other.

After detection of each jump, the dynamic threshold THR is preferably set back to this initialization value $THR_0$'.

Further, the block 4 is preferably configured to estimate the noise on the first window A only of the pair of consecutive windows A, B upon which the algorithm of Figure 5 is carried out. The samples of the window B are used to update the noise estimation only if no jump is detected. This way, the noise estimation is not affected by potential jumps.

Then, in order to calculate the dynamic threshold THR based on the estimated noise, the block 4 preferably filters the measured noise by a filter, which may alternatively apply any one of two different time constants, namely a faster one and a slower one.

When the currently measured noise is larger than the previously measured noise (namely, when the noise is increasing), the faster time constant is preferably applied by the filter included in block 4. This way, while the noise is increasing, the dynamic threshold THR as output by the block 4 is increased faster. This advantageously prevents the block 4 from setting the dynamic threshold THR to a value lower than the noise in case of a sudden increase in the noise level, which would lead the jump detector 5 to detect false jumps.

When instead the currently measured noise is lower than the previously measured noise (namely, when the noise is decreasing), the slower time constant is preferably applied by the filter included in block 4. This way, while the noise is decreasing, the dynamic threshold THR as output by the block 4 is decreased more slowly. This advantageously allows better approximating the dynamic threshold THR over the noise level.

As to the noise estimation carried out by block 4, the estimated noise is preferably expressed as a standard deviation ($\sigma$) or variance ($\sigma^2$) of the noise signal. Assuming a Gaussian noise, the 99 percentile of the noise swing on each side of the mean is obtained at $3\sigma$. Be C1 and C2 the propagation delay values for two different modulation schemes A and B (switch from A to B inducing a jump). Assuming a Gaussian noise, it is expected a deviation of $3\sigma$ at each side of the mean propagation delay corresponding to each modulation. A jump due to a switch of modulation from A to B or *vice versa* may accordingly be detected if it is larger than $6\sigma$. Hence, the dynamic threshold THR is preferably set equal to $(6\sigma)^2=36\sigma^2$.

Second embodiment (second variant): segmented-based jump detector

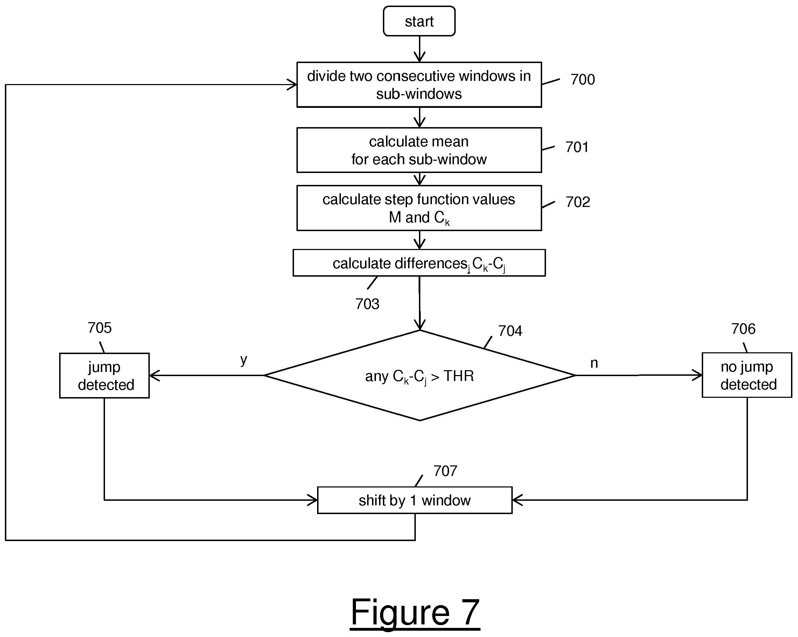

According to variant second variant of the second embodiment, the jump detector 5 may be configured to operate in a different way for detecting jumps, as it will be now described in detail with reference to the flow chart of Figure 7.

First of all, the jump detector 5 preferably divides the propagation samples of two consecutive windows in a number of sub-windows of size Ws, as described above (step 700).

Then, for each sub-window, the jump detector 5 preferably calculates the mean of the Ws propagation delay samples comprised in the sub-window (step 701).

Then, the jump detector 5 preferably determines a step function approximating the means calculated at step 701 (step 702). The step function is preferably made by a set of M values $C_k$ (k=1, 2, ... M). The number M is preferably lower than the overall number of sub-windows N=2Wn/Ws, meaning that a same value $C_k$ may cover multiple adjacent sub-windows. Both M and the values $C_k$ are preferably calculated by providing the following cost function:

$$K \cdot M + \sum_{i=1}^{N} \left( Y_i - C_{k[i]} \right)^2$$

where N is the number of sub-windows, $Y_i$ is the mean of the $i^{th}$ sub-window, $C_{k[i]}$ is the step function value for the $i^{th}$ sub-window which use the k-nth constant value produced by optimization of the above cost functon, M, which is less or equal to N is also produced by the optimization of the above cost function as the cardinality of the set of values $C_k$. K is a scaling factor which is preferably set equal to a multiple of the estimated noise, e.g. six times the estimated noise if standard deviation is used or equivalently 36 times if variance is used.

Hence, at step 702 the value M and the values $C_k$ are preferably calculated as those which minimize the cost function.

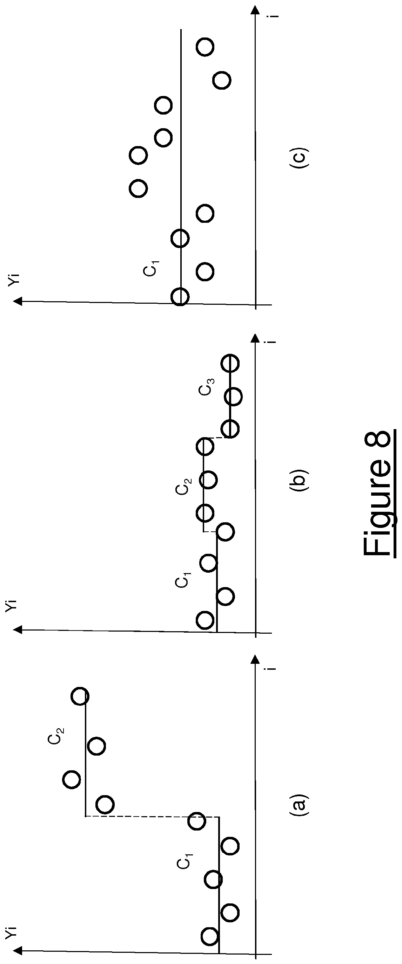

Figure 8 shows three graphs with exemplary calculations of step functions as described above. In each Figure, the means $Y_i$ calculated in each sub-window are shown.

Graph (a) shows a situation wherein a jump occurs in the sequence of propagation delay samples in a certain propagation direction. In this case, the minimization of the cost function above provides M=2, namely a first value $C_1$ for all the sub-windows preceding the jump and a second value $C_2$ for all the sub-windows following the jump.

Graph (b) shows instead a stable situation, wherein no jumps occur and the noise is restrained. In this case, the minimization of the cost function above may provide e.g. M=3, namely a step function with three values $C_1$, $C_2$ and $C_3$ with small reciprocal distances.

Graph (c) finally shows a very noisy situation, wherein the sequence of propagation delay samples is affected by a remarkable noise. In this case, minimization of the cost function above typically provides M=1, namely a single value $C_1$ extending throughout all the sub-window. This single-step function basically corresponds to the null-slope linear regression shown in graph (b) of Figure 6.

Once the values $C_k$ of the step function has been determined, then the jump detector 5 preferably considers all the possible pairs of values $C_i$ and calculates their differences (step 703).

Then, the jump detector 5 preferably compares all the differences calculated at step 704 with the dynamic threshold THR calculated by block 4 (step 704).

If at least one of such differences is higher than THR, then a jump is detected (step 704). Otherwise, if no one of such differences is higher than THR, no jump is detected (step 705). It means that the segments, let's say M have to shift all in the same direction, if it is a true modulation change. Otherwise, if the level of the segments goes back and forth, it is noise. In such a case, the knowledge of the phenomenon is used to filter detection.

An additional criterion to filter the outputs of the segment-based jump detector (case where for some $C_k$, $C_j$ pair jump threshold has been exceeded and thus jump would be recognized) exploits the knowledge of the observed phenomenon, which requires the values $C_k$ to be monotonic, either increasing or decreasing to represent a true jump since for example in case of modulation changes the propagation delay variations are expected to be monotonic in one direction or the other. Conversely, if the level of the segments goes back and forth, the jump detector has to deal with noise only.

The above steps 700-705 are preferably periodically iterated. At each iteration, a shifting by 1 window is perform (step 706), so as to consider the boundary between each pair of two consecutive windows. This way, possible jumps occurring close to the boundary between two consecutive windows are advantageously detected by the jump detector 5.

As to the noise estimation and dynamic threshold calculation performed by block 4 for providing the dynamic threshold THR, the above description relating to block 4 in cooperation with the regressive jump detector (first variant of the second embodiment) still applies. Hence, a detailed description will not be repeated.

Third embodiment: slow jump detector

According to a third embodiment, the jump detector 5 is preferably configured to detect smaller jumps in the sequences of propagation delay samples raw_t12[n][fwd] and raw_t12[n][bwd], and also ramp-type variations of the propagation delay due e.g. to load changes.

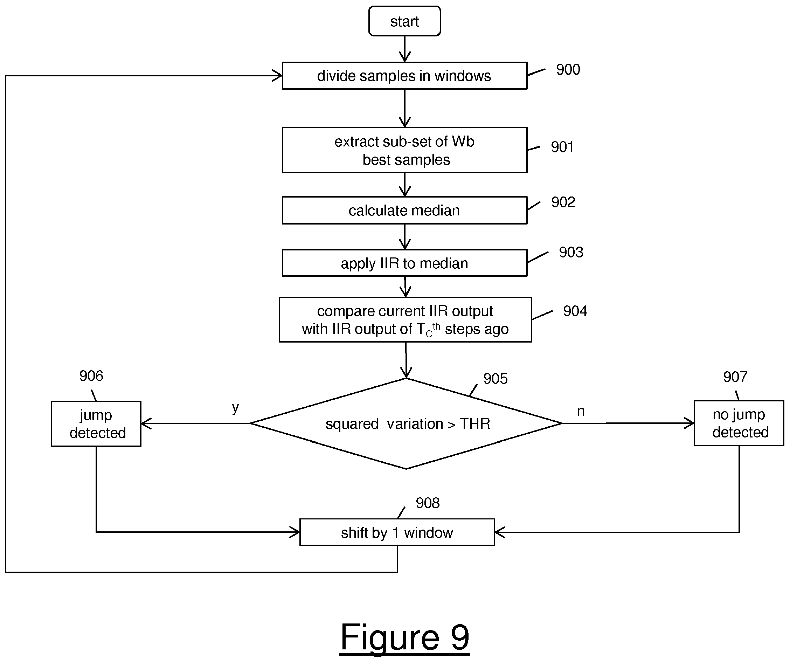

To this purpose, the jump detector 5 preferably operates on multiple windows, as it will be described in detail herein after with reference to the flow chart of Figure 9.

For each propagation direction, the jump detector 5 preferably divides the propagation delay samples in windows of Wn samples. Wn may be equal e.g. to 256 (step 900).

Then, the jump detector 5 preferably extracts, from each window, a subset of Wb samples, as those having the lowest propagation delay values (step 901). Wb may be equal to 0.1*Wn.

The jump detector 5 then preferably calculates a median of the Wb selected samples (step 902).

Then, the jump detector 5 preferably applies an IIR filter with a time constant $T_C$ to the medians of the various windows (step 903), in order to remove noise.

The jump detector 5 then preferably compares the squared variation of the output of the IIR filter between current step and the $T_C^{th}$ preceding step (step 904), that has the dimensions of a variance, and compares it with the dynamic threshold THR received from the block 2c (step 905).

If the dynamic threshold THR is overcome, then a jump in the propagation delay is detected (step 906). Otherwise, no jump in the propagation delay is detected (step 907).

The above steps 900-907 are preferably periodically iterated. At each iteration, a shifting by 1 window is perform (step 908).

Therefore, the jump detector 5 according to the third embodiment basically operates as the jump detector 5 according to the first embodiment, with the difference that, in evaluating the squared variation of the IIR filter output, instead of considering the IIR filter outputs at two consecutive steps, the IIR filter outputs at steps spaced apart by $T_C$ (equal to the filter length) are considered.

In order to provide the dynamic threshold THR to the slow jump detector 5 according to the third embodiment, the block 4 is preferably configured with an initialization value $THR_0$' of the dynamic threshold THR, which is preferably higher than the minimum jump detectable by the jump detector 5. This way, detection of jumps is prevented at startup, where transitory behaviors may provide unreliable results.

Further, the block 4 is preferably configured so as to prevent the dynamic threshold THR from falling underneath a minimum value. Such minimum value may be e.g. 1 microsecond.

Further, in order to calculate the dynamic threshold THR based on the measured noise, the block 4 preferably calculates the median over the subset of Wb "best" propagation delay samples in each window. The medians are preferably stored in a circular buffer.

Then, a variance of the calculated medians is preferably calculated over a number $N_{slow}$ of consecutive windows by an IIR filter. Such variance preferably is the noise estimation provided by block 4. The block 4 then preferably filters such noise estimation by a filter which may alternatively apply any one of two different time constants, namely a faster one and a slower one.

When the currently estimated noise is larger than the previously estimated noise (namely, when the noise is increasing), the faster time constant is preferably applied by the filter included in block 4. This way, while the noise is increasing, the dynamic threshold THR as output by the block 4 is increased faster.

When instead the currently estimated noise is lower than the previously estimated noise (namely, when the noise is decreasing), the slower time constant is preferably applied by the filter included in block 4. This way, while the noise is decreasing, the dynamic threshold THR as output by the block 4 is updated more slowly and decreases. This way, the dynamic threshold THR is kept as close as possible to the minimum detection capability of the jump detector 5, while avoiding detecting false jumps due to sudden increases of the noise level.

It shall be noticed that the jump detector 5 according to the third embodiment uses a jump estimation that is calculated as the difference between the current IIR filter output and the IIR filter output a number of steps ago equal to the depth of the IIR filter itself. This provides much better performance with respect to known jump detectors, also when propagation delays changes are more diluted changes (over time). The jump detector 5 according to the third embodiment is advantageously able to detect very small changes.

According to embodiments of the present disclosure, the synchronization system comprises at least two synchronization devices, each synchronization device comprising a respective noise estimator and dynamic threshold calculator block and a respective jump detector.

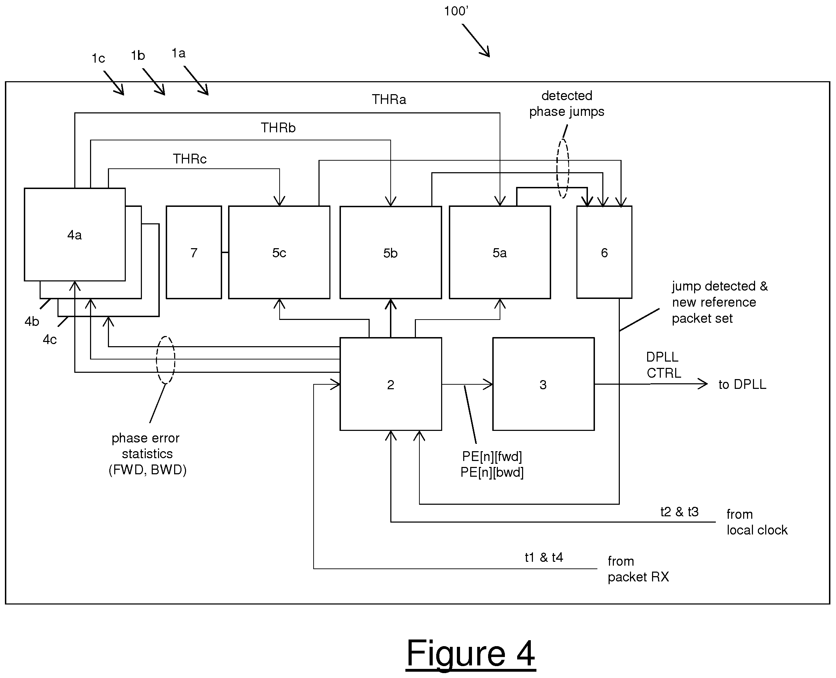

Figure 4 shows a synchronization system 100' according to one of such embodiments.

Besides the above described blocks 2, 3 and 6, the synchronization system 1' preferably comprises three synchronization devices 1a 1b and 1c, each synchronization device comprising a respective noise estimator and dynamic threshold calculator block 4a, 4b, 4c and a respective jump detector 5a, 5b, 5c connected thereto, respectively.

Each block 4a, 4b, 4c is configured to receive from block 2 the phase error statistics for both the forward and the backward direction and to process them for measuring the noise affecting the propagation delay samples raw_t12[n][fwd] and raw_t12[n][bwd] calculated by the block 2. Besides, based on the estimated noise, each block 4a, 4b, 4c preferably determines and dynamically adjusts a respective dynamic threshold THRa, THRb, THRc, which the respective jump detector 5a, 5b, 5c will then use in order to properly discriminate true jumps from noise.

Preferably, the first synchronization device 1a comprises a noise estimator and dynamic threshold calculator block 4a and a jump detector 5a according to the first embodiment described above (fast jump detector).

Besides, preferably, the second synchronization device 1b comprises a noise estimator and dynamic threshold calculator block 4b and a jump detector 5b according to either the first variant or the second variant of the second embodiment described above (fast regressive jump detector or segmented jump detector).

Besides, preferably, the third synchronization device 1c comprises a noise estimator and dynamic threshold calculator block 4c and a jump detector 5c according to the third embodiment described above (slow jump detector). Hence, advantageously, the jump detector 5a is capable of detecting large and sharp jumps.

An advantage of the jump detector 5a with respect to the jump detector 5b is that its jump detection is based on a comparison between the instantaneous value of the median of the best Wb samples in a window and the corresponding filtered value via a IIR filter. If the variation of the median is sharp, this filter will pass it almost unchanged and the difference between the two medians becomes the jump estimation (apart a constant). By considering e.g. the two values of the median as the two basis of a rectangle leaning on the base where abscissa represent time and ordinate the difference among medians, the jump detector 5b performs the linear regression between the means of the samples of each sub-window (on two adjacent windows), thereby obtaining a straight line with a certain slope. Then, the jump estimation is based on the difference between each sub-window mean and this interpolating line. Matching the two cases and making some simplification it can be assumed that the interpolating line is the diagonal of the triangle of the previous case and can be observed that the same jump in the two cases will require to the jump detector 5b a sensitivity which is about twice with respect to the first variant of the jump detector 5b. Differently the second variant of the jump detector 5b has a sensitivity which is equal or better than jump detector 5a.

As described above, the jump detector 5a preferably uses a jump estimation that is calculated as the difference between the current IIR filter output and the previous IIR filter output (instead of matching with the IIR filter output a number of steps ago equal to the depth of the IIR filter itself). Hence, the jump detector 5a is advantageously capable of detecting "ideal" jumps, since it left pass through almost unchanged ideal jumps. On the other hand, the jump detector 5a tends to filter out more diluted changes (over time) that in reality may be "true" jumps. Moreover, the jump detector 5a may miss jumps occurring at the boundary between consecutive time windows.

Therefore, according to the embodiment of Figure 4, the synchronization system 1' comprises several jump detectors operating at the same time over the same sequences of propagation delay samples. Due to their different features, the jump detectors are capable of detecting different types of jumps. Their combination therefore advantageously allows detecting any type of jump, thereby maximizing the capability of the overall synchronization system of detecting true jumps in the propagation delays of the synchronization packets, while minimizing the risk of detecting false jumps due to noise.

In order to coordinate the various jump detectors 5a, 5b and 5c of the synchronization system 100', the control block 6 is preferably configured to give the higher priority to the jump detectors 5a, 5b working with a faster time constant, in case of multiple detections. This is because such jump detectors 5a, 5b are in general less sensitive, namely they are able to detect higher jumps with respect to jump detector 5c. Hence, jump detectors 5a, 5b can perform larger corrections that, if missed, can cause the synchronization system 1' to derive with respect to the reference frequency.

Therefore, the jump detectors 5a and 5b in general have higher priority than the slow jump detector 5c. In other words, when any one of detectors 5a and 5b detects a jump, that jump is taken by the control block 6, while possible jumps detected at the same time by the jump detector 5c are preferably ignored.

Each time any one of the jump detectors 5a, 5b, 5c detects a jump, the control block 6 instructs the block 2 to select new reference packet(s) and restarts all the jump detectors 5a, 5b, 5c.

Advantageously, the synchronization system 100' does not have blind periods, namely periods during which it is unable to detect jumps. Indeed, as mentioned above, all the jump detectors 5a, 5b, 5c as re-initialized when a jump is detected and new reference packets are adopted. The jump detector 5a and jump detector 5b start working immediately. As to the jump detector 5c, it preferably starts collecting shorter statistics at warm-up with respect to normal operation. Statistics are performed on nominal filter length as soon as new windows are collected after a jump detection or startup. This way, the activation delay of the jump detector 5c is advantageously made faster.

It shall be indeed noticed that, if the synchronization system 100' is used in a radio communication network, the propagation delays may exhibit multiple jumps very close to each other. It is therefore important to guarantee the continuity of the jump detection capability across the reset due to a jump detection. In particular, since the slow jump detector 5c operates on multiple windows, the restoration of its jump detection capability requires a long time after reset. Otherwise, the risk is to cumulate a high phase error and to reach a reset condition for the clock recovery algorithm, due to excessive frequency error diagnostics.

For the above reasons, the above mentioned circular buffer storing the calculated medians in the slow jump detector 5c for the purpose of noise estimation as described above is preferably never reset. The samples stored therein indeed represent propagation delays measured with respect to a reference packet, that is taken as a reference for propagation delay measurements at startup and after a reset following detection of a new jump. When a new jump is detected, the old samples are preferably kept in the buffer and a new reference packet is selected. Then, a measure of new propagation delay samples with respect to the new reference packets are also stored in the buffer, so that all measures are consistent. This way, the noise estimation by the block 4c (and hence the jump detection capability of the jump detector 5c) has no breaks.

In addition, the measure of the error is restarted after detection of a jump and filtered, and the filtered measure is matched with a dynamic threshold set just over the estimated noise level.

Moreover, as to the jump detector 5c, the inventors have noticed the slave local reference oscillator (OCXO), which feeds the DPLL and outputs the recovered frequency that on its turn is used to timestamp the synchronization packets, may be subject to drifts. The effect of this drift can be seen as a "distortion" of the local temporal axis. This effect produces a phase error drift that can be interpreted as a jump. This drift has two main possible causes:

a) changes in temperature of the OCXO;
b) it can be a transitory phenomenon due to the "poor" quality of the recovered frequency before locking.

On the other hands, if the drift is to high, it can cause a sequence of "false" jumps to be detected, that can prevent locking. Hence, the drift shall preferably detected and its effect is cancelled from jumps estimation.

The slow jump detector 5c is "slow" in the sense that, since it shall be accurate, it estimates the phase error in a quite long interval in terms of windows. Thus, if the phase error is affected by a systematic drift (represented as a straight line with a given slope), the difference between the rise at the beginning and the end of the estimation interval can be larger than the dynamic threshold THRc. In such conditions, the slow jump detector 5c could repeatedly detect "false" jumps, that prevent the system lock.

According to variants of the present disclosure, this issue is solved by providing the synchronization system 100' with a detrender block 7 (depicted in Figure 4) cooperating with the jump detector 5c.

The detrender block 7 is preferably configured to estimate the "drift" component in the propagation delay variation of the synchronization packets, which in practice represents the phase error, and remove them from the input to the jump detector 5c.

In particular, the detrender block 7 is preferably configured to estimate the local OCXO frequency error, based on the observation of the value of the medians $M_n$ (where n is the index of the single window) calculated at step 902 of the flow chart of Figure 7, as described above. The detrender block 7 then preferably provides the estimation of the local OCXO frequency error to the jump detector 5c, which uses it as a scale factor multiplying the variation of the IIR filter output calculated at step 904 of the flow chart of Figure 9. This scale factor advantageously translates this estimation of the local OCXO frequency error on a window to the error accumulated along the whole length of the IIR filter of the jump detector 5c.

The estimation M'[n] of the value of the median corresponding to the estimated drift will be later used in the jump estimation.

The "gain" factors used in the drift estimator have been computed in order to be matched with the time constant of the filter comprised in the jump detector 5c. This means that the drift estimator reaches the steady state in a number of windows equal to the length of the filter comprised in the jump detector 5c.

In particular, as described above the jump detector 5c computes the variations of the output of its IIR filter between the current step and the $T_C^{th}$ previous step. In other words, the value currently output of the IIR filter is compared with the value output by the same IIR filter $T_C$ steps before. With 128 pkt/s, a single step is 2 seconds. If $M_n$ is the median calculated for the last window, then the value output by the IIR filter is:

$$Y_n = (1-a) * Y_{n-1} + M_n$$

The variation of the IIR filter output as computed by the jump detector 5c is accordingly:

$$J_n = (Y_n - M'[n] - Y_{n-Tc})^2$$

It shall be noticed that the median is compensated with the estimation of the drift effect M'[n].

The jump detector 5c usually works with its slave clock syntonized to the a master frequency. Hence, variations of the median are mainly due to PDV floor noise or a change in the propagation delay of the synchronization packets. When a jump is detected, the phase error estimation has to be reset, since it works with a constant PDV floor only.

If the slave clock exhibits a significant relative drift from the master frequency, the consequent median variation over the median IIR filter bandwidth might be seen as a continuous jump. In this case, the reset of the phase error estimation causes the zeroing of the proportional term of the DPLL, leading to a very slow loop (the PLL output is driven mainly by the integral term).

This condition was observed by the Applicant seen during test in climatic chamber with 16 pkt/s rate. It was observed that a temperature variation from 0° to -20° caused variation of tens of ppb for the slave clock. The clock recovery loop is too "slow" to react to this variation, the bandwidth of median filter is increased to 320s, and the jump detector 5c was continuously triggered. By adding the detrender block 7, the problem has been solved.

According to some variants, the propagation delay samples are randomized in the backward direction. This is advantageous in case of continuous jumps caused from missing minimum propagation delay samples.

The Applicant has indeed noticed the presence of beating of propagation delay variation patterns, due to channel FEC used in Microwave links, with the IEEE-1588 transmission period in the forward direction (Sync packet) and the almost fixed latency between reception of Sync packet in the forward direction and transmission of the associated Delay_Request packets. The reason for beating is that the FEC works on accumulated packets in a buffer. The FEC works on chucks. The cumulated chucks depends on IEEE-1588 transmission period: the position of the Delay_Request packets is strongly correlated with the position of the associate sync message (position in the chunks).

Without corrective actions, the following effects are observed: a) the previous cause a bimodal density probability distribution for propagation delay samples for the reverse direction; b) if the physical clock (not IEEE-1588 clock) used by the radio and by the IEEE-1588 slave clock is the same, the "hole" in the bi-modal distribution is fixed and placed in an arbitrary position and cause relatively small problems to the IEEE-1588 clock recovery algorithm.

Conversely, if the physical clocks are not synchronous, the "hole" shifts on the entire distribution changing periodically in a significant manner the value of the minimum propagation delay. This is the most used criteria for packet selection function in order to have not a changing propagation delay between master and slave that can be interpreted from slave as a master frequency change.

In order to obviate such drawbacks, the correlation between the two propagation directions is preferably broken, by randomizing the departure time of Delay_Request packets.

The Applicant has also noticed that a locked state shall be defined for time recovery algorithm, to make the user of synchronization service to consider reliable the output of the Time Recovery slave clock in terms of PPS and Time of the Day. This would be useful in different situations, such as startup, change of network configuration, and network and equipment protection. It shall be noticed that a status is not defined in the IEEE-1588 standard, neither for frequency recovery nor for time recovery. However, for the first case a solution may be provided based on the well-known theory of PLLs.

To this purpose, according to advantageous variants, the Time Recovery algorithm (TR algorithm herein after) operates as follows.

The TR algorithm preferably produces TimeOffset estimation, in order to provide IEEE-1588 phase reference in term of PPS and IEEE-1588 ToD (Time of the Day).

The TimeOffset values are then preferably filtered to produce the Smoothed Time Offset.

The TR State is preferably LOCKED only when a new valid TimeOffset value produces an absolute variation of the steady-state value of the Smoothed TimeOffset (Moving Average) less than a proper threshold (e.g. 50 ns, the Time Error performance target).

The Applicant has also noticed that debug of in-field issues relying on a limited memory for permanent storage of algorithm traces and limited communication channel bandwidth between the slave clock and the Management System.

Besides, a very important point in practical implementations is the possibility of logging meaningful variables of the IEEE-1588 algorithms, both frequency and time recovery to understand the reasons of possible failures. For instance, corner cases, pathologic PDV profiles, etc. The debug of such issues faces the problem of relying on a limited memory for permanent storage of algorithm traces and limited communication channel bandwidth with the Management System.

The Applicant has noticed that in the IEEE-1588 algorithms, internal state information represents a powerful trouble-shooting tool, since it allows for quite deep understanding of the run-time behavior of the clock recovery (CR) and time recovery (TR).

The implementation is described hereafter.

Log Information may be divided into two main types:

1. Few quantities directly connected to CR/TR quantities/states that can be observed with other tools. Examples are: CRState, Phase Error and PLL Output, TR TimeOffset

2. A lot of internal quantities, that can explain what happen to some of the quantities of the previous type in specific transient.

- at equipment level or Equipment Controller (EC), the log will be used in two operational modes:

  - On-Demand Log: saving of full set of log information (1+2) is started and finished by the Operator, usually in order to capture the whole CR/TR behavior behind transients in specific and known conditions
  - Pro_Active Log: saving of a reduced set of Log Information (1 + a few from 2) is always done, allowing to have available meaningful , even if partial, data already available related to unexpected failure transients
  - 1588 algorithm-EC handshake mechanism described mechanism does not allow to have a dedicated data retrieval mode for each of the above modes, so it is needed that:
  - EC always read the full set of Log Information from 1588 algorithm.
  - EC on the basis of such full set of Log information detects the occurrence of specific events and accordingly selects the subset of data for the Pro-Active Log from the full set and store it into a dedicated file.
  - when On-Demand Log is active, EC stores the full set of Log Information into another file.

The basic concept of this variant is that a continuous logging of all variables is performed. From the analysis of full variables, meaningful events to be traced are recognized. At this point, instead of keeping all the history that would be not compatible with the limited mass memory available in Equipment Controllers, the system may advantageously select a meaningful interval before and after the selected events and only these (comprising the events) are memorized in permanent manner, for granting future and remove access. The amount of history to be saved permanently before and after selected events depends on the sequential depth of the algorithm.

It shall also be noticed that given a IEEE-1588 algorithm with a given sequential depth, it is not possible to debug it by only having the information at specific selected events.

**Claims**

1. A synchronization device (1) for a communication network, said synchronization device (1) comprising:

   - a noise estimator and dynamic threshold calculator block (4) configured to estimate a noise affecting a sequence of propagation delay samples obtained from timestamps relating to synchronization packets exchanged with a master node of said communication network, and to calculate a threshold (THR) based on said estimated noise; and
   - a jump detector (5) configured to detect, based on said threshold (THR), one or more jumps in said sequence of propagation delay samples,

   wherein said jump detector (5) is configured to:

   - divide said sequence of propagation delay samples in windows of Wn samples;
   - extract, from each one of said windows, a respective subset of Wb propagation delay samples, comprising the Wb lower propagation delay values in said window;
   - calculate a median of said Wb extracted propagation delay samples and filter said median by means of a filter;
   - detect a jump by processing a variation of the output of said filter.

2. The synchronization device (1) according to claim 1, wherein said jump detector (5) is configured to detect a jump if a squared variation of the output of said filter between current calculation and previous calculation is higher than said threshold (THR).

3. The synchronization device (1) according to claim 1, wherein said jump detector (5) is configured to detect a jump if a squared variation of the output of said filter between current calculation and $T_C^{th}$ preceding calculation is higher than said threshold (THR), $T_C$ being equal to a length of said filter.

4. The synchronization device according to claim 3, wherein it further comprises a detrender block (7) suitable for cooperating with said jump detector (5), said detrender block (7) being configured to estimate a drift component in said sequence of propagation delay samples and remove it from an input of said jump detector (5).

5. The synchronization device (1) according to any of claims 1 to 4, wherein said noise estimator and dynamic threshold calculator block (4) is configured with an initialization value, $THR_0'$, of said threshold (THR), said initialization value,

$THR_0'$, being higher than a minimum jump detectable by said jump detector (5).

6. The synchronization device (1) according to any of claims 1 to 5, wherein said noise estimator and dynamic threshold calculator block (4) is configured to prevent said threshold (THR) from falling underneath a minimum value.

7. The synchronization device (1) according to any of claims 1 to 6, wherein said noise estimator and dynamic threshold calculator block (4) is configured to provide a noise estimation as a variance of medians of said Wb extracted propagation delay samples, calculated for a number $N_{slow}$ of consecutive windows.

8. The synchronization device (1) according to claim 7, wherein said noise estimator and dynamic threshold calculator block (4) is configured to calculate said threshold (THR) by filtering said noise estimation by a filter capable of alternatively applying a faster time constant and slower time constant, wherein:

   - if a current noise estimation is larger than a previous noise estimation, said filter applies said faster time constant; and
   - if a current noise estimation is lower than a previous noise estimation, said filter applies said slower time constant.

9. A synchronization device (1) for a communication network, said synchronization device (1) comprising:

   - a noise estimator and dynamic threshold calculator block (4) configured to estimate a noise affecting a sequence of propagation delay samples obtained from timestamps relating to synchronization packets exchanged with a master node of said communication network, and to calculate a threshold (THR) based on said estimated noise; and
   - a jump detector (5) configured to detect, based on said threshold (THR), one or more jumps in said sequence of propagation delay samples,

   wherein said jump detector (5) is configured to:

   - divide said sequence of propagation delay samples in windows of Wn samples;
   - further divide the propagation delay samples of two consecutive windows in a number of sub-windows of size Ws;
   - calculate the mean of the Ws propagation delay samples comprised in each sub-window;
   - detect jumps occurring in any one of said two consecutive windows by processing said calculated means for said sub-windows.

10. The synchronization device (1) according to claim 9, wherein said jump detector (5) is configured to detect jumps by:

   - calculating a linear regression of said means calculated for all the sub-windows of said two consecutive windows;
   - calculating, for each sub-window, an error as a difference between the mean calculated for that sub-window and the linear regression calculated for that sub-window;
   - calculating a number of sign changes of said error calculated over all the sub-windows;
   - determining, amongst said calculated errors, a maximum error as the one having maximum absolute value and calculate its square; and
   - detecting a jump if said number of sign changes is lower than a maximum allowed number of sign changes and if said squared maximum error is higher than said threshold (THR).

11. The synchronization device (1) according to claim 9, wherein said jump detector (5) is configured to detect jumps by:

   - determining a step function approximating said means calculated for said sub-windows, said step function being made by a set of M values $C_k$, wherein k=1, 2,..., M;
   - calculating the difference between each possible pair of values $C_k$ and $C_j$ of said step function, wherein j=1, 2,..., M and j≠k; and
   - detecting a jump if at least one of said calculated differences is higher than said threshold (THR).

12. The synchronization device (1) according to any of claims 9 to 11, wherein said noise estimator and dynamic threshold calculator block (4) is configured with an initialization value, $THR_0'$, of said threshold (THR), which is higher than a minimum jump detectable by said jump detector (5).

**13.** The synchronization device (1) according to claim 12, wherein said noise estimator and dynamic threshold calculator block (4) is configured to set said threshold (THR) to said initialization value, $THR_0$', when a jump is detected.

**14.** The synchronization device (1) according to any of claims 9 to 11, wherein said noise estimator and dynamic threshold calculator block (4) is further configured to estimate said noise on said two consecutive windows, propagation delay samples of a second window of said two consecutive window being considered only if no jump is detected.

**15.** The synchronization device (1) according to any of claims 9 to 14, wherein said noise estimator and dynamic threshold calculator block (4) is further configured to calculate said threshold (THR) by filtering said estimated noise by a filter capable of alternatively applying any one of a faster time constant and a slower time constant, wherein:

- when a currently estimated noise is larger than a previously estimated noise, said faster time constant is applied by said filter so that said threshold is increased faster; and
- when a currently estimated noise is lower than a previously estimated noise, said slower time constant is applied by said filter so that said noise is decreased more slowly.

**16.** A synchronization system (100') for a communication network, said synchronization system (100') comprising:

- a phase comparator and packet selection criteria block (2) configured to receive timestamps relating to synchronization packets exchanged with a master node of said communication network and to process them thereby providing a sequence of propagation delay samples relating to said synchronization packets;
- a first synchronization device (1a) according to any of claims 2, 4, 5, 6 or 7;
- a second synchronization device (1b) according to any of claims 9 to 15; and
- a third synchronization device (1c) according to any of claims 3 to 7.

**17.** The synchronization system (100') according to claim 16, wherein it further comprises a control block (6) configured to coordinate said first synchronization device (1a), said second synchronization device (1b) and said third synchronization device (1c), said first synchronization device (1a) and said second synchronization device (1b) having a priority higher than said third synchronization device (1c).

**Patentansprüche**

**1.** Synchronisierungsvorrichtung (1) für ein Kommunikationsnetzwerk, wobei die Synchronisierungsvorrichtung (1) Folgendes umfasst:

- einen Rauschschätzer- und dynamischen Schwellenberechnerblock (4), ausgelegt zum Schätzen eines Rauschens, das eine Sequenz von Ausbreitungsverzögerungsabtastungen beeinflusst, erhalten von Zeitstempeln bezüglich Synchronisierungspaketen, die mit einem Stammknoten des Kommunikationsnetzwerks ausgetauscht werden, und zum Berechnen einer Schwelle (THR) basierend auf dem geschätzten Rauschen; und
- einen Sprungdetektor (5), ausgelegt zum Detektieren, basierend auf der Schwelle (THR), von einem oder mehreren Sprüngen in der Sequenz von Ausbreitungsverzögerungsabtastungen,

wobei der Sprungdetektor (5) ausgelegt ist zum:

- Teilen der Sequenz von Ausbreitungsverzögerungsabtastungen in Fenster mit Wn Abtastungen;
- Extrahieren, aus jedem der Fenster, einer entsprechenden Teilmenge von Wb Ausbreitungsverzögerungsabtastungen, umfassend die Wb niedrigeren Ausbreitungsverzögerungswerte in dem Fenster;
- Berechnen eines Medians der Wb extrahierten Ausbreitungsverzögerungsabtastungen und Filtern des Medians mittels eines Filters;
- Detektieren eines Sprungs durch Verarbeiten einer Abweichung des Ausgangs des Filters.

**2.** Synchronisierungsvorrichtung (1) nach Anspruch 1, wobei der Sprungdetektor (5) ausgelegt ist zum Detektieren eines Sprungs, wenn eine quadratische Abweichung des Ausgangs des Filters zwischen einer aktuellen Berechnung und einer vorherigen Berechnung höher als die Schwelle (THR) ist.

**3.** Synchronisierungsvorrichtung (1) nach Anspruch 1, wobei der Sprungdetektor (5) ausgelegt ist zum Detektieren eines Sprungs, wenn eine quadratische Abweichung des Ausgangs des Filters zwischen einer aktuellen Berechnung und einer $T_c$-ten vorherigen Berechnung höher als die Schwelle (THR) ist, wobei $T_c$ gleich einer Länge des Filters ist.

4. Synchronisierungsvorrichtung nach Anspruch 3, wobei sie ferner einen Trendentfernungsblock (7) umfasst, geeignet zum Kooperieren mit dem Sprungdetektor (5), wobei der Trendentfernungsblock (7) ausgelegt ist zum Schätzen einer Driftkomponente in der Sequenz von Ausbreitungsverzögerungsabtastungen und Entfernen derselben von einem Eingang des Sprungdetektors (5).

5. Synchronisierungsvorrichtung (1) nach einem der Ansprüche 1 bis 4, wobei der Rauschschätzer- und dynamische Schwellenberechnerblock (4) mit einem Initialisierungswert, THRo', der Schwelle (THR) ausgelegt ist, wobei der Initialisierungswert, THRo', höher als ein minimaler Sprung ist, der durch den Sprungdetektor (5) detektierbar ist.

6. Synchronisierungsvorrichtung (1) nach einem der Ansprüche 1 bis 5, wobei der Rauschschätzer- und dynamische Schwellenberechnerblock (4) dazu ausgelegt ist zu verhindern, dass die Schwelle (THR) unter einen Mindestwert fällt.

7. Synchronisierungsvorrichtung (1) nach einem der Ansprüche 1 bis 6, wobei der Rauschschätzer- und dynamische Schwellenberechnerblock (4) ausgelegt ist zum Bereitstellen einer Rauschschätzung als eine Varianz von Medianen der Wb extrahierten Ausbreitungsverzögerungsabtastungen, berechnet für eine Anzahl $N_{langsam}$ von aufeinander folgenden Fenstern.

8. Synchronisierungsvorrichtung (1) nach Anspruch 7, wobei der Rauschschätzer- und dynamische Schwellenberechnerblock (4) ausgelegt ist zum Berechnen der Schwelle (THR) durch Filtern der Rauschschätzung durch einen Filter, der in der Lage ist, alternativ eine schnellere Zeitkonstante und eine langsamere Zeitkonstante anzuwenden, wobei:

   - der Filter die schnellere Zeitkonstante anwendet, wenn eine aktuelle Rauschschätzung größer als eine vorherige Rauschschätzung ist; und
   - der Filter die langsamere Zeitkonstante anwendet, wenn eine aktuelle Rauschschätzung niedriger als eine vorherige Rauschschätzung ist.

9. Synchronisierungsvorrichtung (1) für ein Kommunikationsnetzwerk, wobei die Synchronisierungsvorrichtung (1) Folgendes umfasst:

   - einen Rauschschätzer- und dynamischen Schwellenberechnerblock (4), ausgelegt zum Schätzen eines Rauschens, das eine Sequenz von Ausbreitungsverzögerungsabtastungen beeinflusst, erhalten von Zeitstempeln bezüglich Synchronisierungspaketen, die mit einem Stammknoten des Kommunikationsnetzwerks ausgetauscht werden, und zum Berechnen einer Schwelle (THR) basierend auf dem geschätzten Rauschen; und
   - einen Sprungdetektor (5), ausgelegt zum Detektieren, basierend auf der Schwelle (THR), von einem oder mehreren Sprüngen in der Sequenz von Ausbreitungsverzögerungsabtastungen,

   wobei der Sprungdetektor (5) ausgelegt ist zum:

   - Teilen der Sequenz von Ausbreitungsverzögerungsabtastungen in Fenster mit Wn Abtastungen;
   - weiteres Teilen der Ausbreitungsverzögerungsabtastungen von zwei aufeinander folgenden Fenstern in eine Anzahl von Unterfenstern der Größe Ws;
   - Berechnen des Mittelwerts der in jedem Unterfenster enthaltenen Ws Ausbreitungsverzögerungsabtastungen;
   - Detektieren von Sprüngen, die in einem der zwei aufeinander folgenden Fenster auftreten, durch Verarbeiten der berechneten Mittelwerte für die Unterfenster.

10. Synchronisierungsvorrichtung (1) nach Anspruch 9, wobei der Sprungdetektor (5) ausgelegt ist zum Detektieren von Sprüngen durch:

   - Berechnen einer linearen Regression der Mittelwerte, berechnet für alle Unterfenster der zwei aufeinander folgenden Fenster;
   - Berechnen für jedes Unterfenster, eines Fehlers als eine Differenz zwischen dem für dieses Unterfenster berechneten Mittelwert und der für dieses Unterfenster berechneten linearen Regression;
   - Berechnen einer Anzahl von Vorzeichenwechseln des über alle Unterfenster berechneten Fehlers;
   - Bestimmen, unter den berechneten Fehlern, eines maximalen Fehlers als denjenigen, der einen maximalen Absolutwert aufweist, und Berechnen seines Quadrats; und

- Detektieren eines Sprungs, wenn die Anzahl von Vorzeichenwechseln niedriger als eine maximal erlaubte Anzahl von Vorzeichenwechseln ist und wenn der quadrierte maximale Fehler höher als die Schwelle (THR) ist.

11. Synchronisierungsvorrichtung (1) nach Anspruch 9, wobei der Sprungdetektor (5) ausgelegt ist zum Detektieren von Sprüngen durch:

- Bestimmen einer Sprungfunktion, die die für die Unterfenster berechneten Mittelwerte annähert, wobei die Sprungfunktion durch eine Menge von M Werten $C_k$ gebildet wird, wobei k=1, 2, ..., M;
- Berechnen der Differenz zwischen jedem möglichen Paar von Werten $C_k$ und $C_j$ der Sprungfunktion, wobei j=1, 2, ..., M und j≠k; und
- Detektieren eines Sprungs, wenn zumindest eine der berechneten Differenzen höher als die Schwelle (THR) ist.

12. Synchronisierungsvorrichtung (1) nach einem der Ansprüche 9 bis 11, wobei der Rauschschätzer- und dynamische Schwellenberechnerblock (4) mit einem Initialisierungswert, THRo', der Schwelle (THR) ausgelegt ist, der höher als ein minimaler Sprung ist, der durch den Sprungdetektor (5) detektierbar ist.

13. Synchronisierungsvorrichtung (1) nach Anspruch 12, wobei der Rauschschätzer- und dynamische Schwellenberechnerblock (4) dazu ausgelegt ist, die Schwelle (THR) auf den Initialisierungswert, THRo', zu setzen, wenn ein Sprung detektiert wird.

14. Synchronisierungsvorrichtung (1) nach einem der Ansprüche 9 bis 11, wobei der Rauschschätzer- und dynamische Schwellenberechnerblock (4) ferner ausgelegt ist zum Schätzen des Rauschens auf zwei aufeinander folgenden Fenstern, wobei Ausbreitungsverzögerungsabtastungen eines zweiten Fensters der zwei aufeinander folgenden Fenster nur berücksichtigt werden, wenn kein Sprung detektiert wird.

15. Synchronisierungsvorrichtung (1) nach einem der Ansprüche 9 bis 14, wobei der Rauschschätzer- und dynamische Schwellenberechnerblock (4) ferner ausgelegt ist zum Berechnen der Schwelle (THR) durch Filtern des geschätzten Rauschens durch einen Filter, der in der Lage ist, alternativ eine schnellere Zeitkonstante oder eine langsamere Zeitkonstante anzuwenden, wobei:

- die schnellere Zeitkonstante durch den Filter angewendet wird, wenn ein aktuell geschätztes Rauschen größer als ein vorher geschätztes Rauschen ist, damit die Schwelle schneller erhöht wird; und
- die langsamere Zeitkonstante durch den Filter angewendet wird, wenn ein aktuell geschätztes Rauschen niedriger als ein vorher geschätztes Rauschen ist, damit das Rauschen langsamer verringert wird.

16. Synchronisierungssystem (100') für ein Kommunikationsnetzwerk, wobei das Synchronisierungssystem (100') Folgendes umfasst:

- einen Phasenvergleicher- und Paketauswahlkriterienblock (2), ausgelegt zum Empfangen von Zeitstempeln bezüglich Synchronisierungspaketen, die mit einem Stammknoten des Kommunikationsnetzwerks ausgetauscht werden, und zum Verarbeiten derselben, dabei eine Sequenz von Ausbreitungsverzögerungsabtastungen bezüglich der Synchronisierungspakete bereitstellend;
- eine erste Synchronisierungsvorrichtung (1a) nach einem der Ansprüche 2, 4, 5, 6 oder 7;
- eine zweite Synchronisierungsvorrichtung (1b) nach einem der Ansprüche 9 bis 15; und
- eine dritte Synchronisierungsvorrichtung (1c) nach einem der Ansprüche 3 bis 7.

17. Synchronisierungssystem (100') nach Anspruch 16, wobei es ferner einen Steuerungsblock (6) umfasst, der ausgelegt ist zum Koordinieren der ersten Synchronisierungsvorrichtung (1a), der zweiten Synchronisierungsvorrichtung (1b) und der dritten Synchronisierungsvorrichtung (1c), wobei die erste Synchronisierungsvorrichtung (1a) und die zweite Synchronisierungsvorrichtung (1b) eine höhere Priorität als die dritte Synchronisierungsvorrichtung (1c) haben.

**Revendications**

1. Dispositif de synchronisation (1) pour un réseau de communication, ledit dispositif de synchronisation (1) comprenant :

un bloc estimateur de bruit et calculateur de seuil dynamique (4), configuré pour estimer un bruit affectant une séquence d'échantillons de délai de propagation obtenus à partir d'horodatages relatifs à des paquets de synchronisation échangés avec un noeud maître dudit réseau de communication, et pour calculer un seuil (THR) basé sur ledit bruit estimé ; et

un détecteur de saut (5), configuré pour détecter, sur la base dudit seuil (THR), un ou plusieurs sauts dans ladite séquence d'échantillons de délai de propagation,

ledit détecteur de saut (5) étant configuré pour :

diviser ladite séquence d'échantillons de délai de propagation en fenêtres de Wn échantillons ;

extraire, de chacune desdites fenêtres, un sous-ensemble respectif de Wb échantillons de délai de propagation, comprenant les Wb valeurs de délai de propagation inférieures dans ladite fenêtre ;

calculer une médiane desdits Wb échantillons de délai de propagation extraits et filtrer ladite médiane au moyen d'un filtre ;

détecter un saut en traitant une variation de la sortie dudit filtre.

2. Dispositif de synchronisation (1) selon la revendication 1, dans lequel ledit détecteur de saut (5) est configuré pour détecter un saut si une variation au carré de la sortie dudit filtre entre un calcul actuel et un calcul précédent est supérieure audit seuil (THR).

3. Dispositif de synchronisation (1) selon la revendication 1, dans lequel ledit détecteur de saut (5) est configuré pour détecter un saut si une variation au carré de la sortie dudit filtre entre un calcul actuel et un $T_c^{\text{ième}}$ calcul précédent est supérieure audit seuil (THR), $T_c$ étant égal à une longueur dudit filtre.

4. Dispositif de synchronisation selon la revendication 3, comprenant en outre un bloc détendanceur (7) approprié pour coopérer avec ledit détecteur de saut (5), ledit bloc détendanceur (7) étant configuré pour estimer une composante de glissement dans ladite séquence d'échantillons de délai de propagation et la supprimer d'une entrée dudit détecteur de saut (5).

5. Dispositif de synchronisation (1) selon l'une quelconque des revendications 1 à 4, dans lequel ledit bloc estimateur de bruit et calculateur de seuil dynamique (4) est configuré avec une valeur d'initialisation, $THR_0{}'$, dudit seuil (THR), ladite valeur d'initialisation, $THRo'$, étant supérieure à un saut minimum détectable par ledit détecteur de saut (5).

6. Dispositif de synchronisation (1) selon l'une quelconque des revendications 1 à 5, dans lequel ledit bloc estimateur de bruit et calculateur de seuil dynamique (4) est configuré pour empêcher ledit seuil (THR) de tomber au-dessous d'une valeur minimale.

7. Dispositif de synchronisation (1) selon l'une quelconque des revendications 1 à 6, dans lequel ledit bloc estimateur de bruit et calculateur de seuil dynamique (4) est configuré pour fournir une estimation de bruit comme étant une variance de médianes desdits Wb échantillons de délai de propagation extraits, calculés pour un nombre $N_{\text{lent}}$ de fenêtres consécutives.

8. Dispositif de synchronisation (1) selon la revendication 7, dans lequel ledit bloc estimateur de bruit et calculateur de seuil dynamique (4) est configuré pour calculer ledit seuil (THR) en filtrant ladite estimation de bruit par un filtre capable d'appliquer alternativement une constante de temps plus rapide et une constante de temps plus lente,

ledit filtre appliquant une constante de temps plus rapide si une estimation de bruit actuelle est supérieure à une estimation de bruit précédente ; et

ledit filtre appliquant une constante de temps plus lente si une estimation de bruit actuelle est inférieure à une estimation de bruit précédente.

9. Dispositif de synchronisation (1) pour un réseau de communication, ledit dispositif de synchronisation (1) comprenant :

un bloc estimateur de bruit et calculateur de seuil dynamique (4), configuré pour estimer un bruit affectant une séquence d'échantillons de délai de propagation obtenus à partir d'horodatages relatifs à des paquets de synchronisation échangés avec un noeud maître dudit réseau de communication, et pour calculer un seuil (THR) basé sur ledit bruit estimé ; et

un détecteur de saut (5), configuré pour détecter, sur la base dudit seuil (THR), un ou plusieurs sauts dans ladite séquence d'échantillons de délai de propagation,

ledit détecteur de saut (5) étant configuré pour :

diviser ladite séquence d'échantillons de délai de propagation en fenêtres de Wn échantillons ;
diviser encore les échantillons de délai de propagation de deux fenêtres consécutives en un nombre de sous-fenêtres de taille Ws ;
calculer la moyenne des Ws échantillons de délai de propagation compris dans chaque sous-fenêtre ;
détecter des sauts survenant dans l'une quelconque desdites deux fenêtres consécutives en traitant ladite moyenne calculée pour lesdites sous-fenêtres.

**10.** Dispositif de synchronisation (1) selon la revendication 9, dans lequel ledit détecteur de saut (5) est configuré pour détecter des sauts en réalisant les étapes consistant à :

calculer une régression linéaire de ladite moyenne calculée pour toutes les sous-fenêtres desdites deux fenêtres consécutives ;
calculer, pour chaque sous-fenêtre, une erreur comme étant une différence entre la moyenne calculée pour cette sous-fenêtre et la régression linéaire calculée pour cette sous-fenêtre ;
calculer un nombre de changements de signe de ladite erreur calculée sur toutes les sous-fenêtres ;
déterminer, parmi lesdites erreurs calculées, une erreur maximale comme étant celle ayant une valeur absolue maximale, et calculer son carré ; et
détecter un saut si ledit nombre de changements de signe est inférieur à un nombre autorisé maximum de changements de signe et si ladite erreur maximale au carré est supérieure audit seuil (THR).

**11.** Dispositif de synchronisation (1) selon la revendication 9, dans lequel ledit détecteur de saut (5) est configuré pour détecter des sauts, la détection comprenant :

la détermination d'une fonction en escalier s'approchant de ladite moyenne calculée pour lesdites sous-fenêtres, ladite fonction en escalier étant faite par un ensemble de M valeurs $C_k$, où k=1, 2, ..., M ;
le calcul de la différence entre chaque paire possible de valeurs $C_k$ et $C_j$ de ladite fonction en escalier, où j=1, 2, ..., M et j#k ; et
la détection d'un saut si au moins une desdites différences calculées est supérieure audit seuil (THR).

**12.** Dispositif de synchronisation (1) selon l'une quelconque des revendications 9 à 11, dans lequel ledit bloc estimateur de bruit et calculateur de seuil dynamique (4) est configuré avec une valeur d'initialisation, $THR_0'$, dudit seuil (THR), qui est supérieure à un saut minimum détectable par ledit détecteur de saut (5).

**13.** Dispositif de synchronisation (1) selon la revendication 12, dans lequel ledit bloc estimateur de bruit et calculateur de seuil dynamique (4) est configuré pour fixer ledit seuil (THR) à ladite valeur d'initialisation, $THR_0'$, quand un saut est détecté.

**14.** Dispositif de synchronisation (1) selon l'une quelconque des revendications 9 à 11, dans lequel ledit bloc estimateur de bruit et calculateur de seuil dynamique (4) est en outre configuré pour estimer ledit bruit sur lesdites deux fenêtres consécutives, lesdits échantillons de délai de propagation d'une seconde fenêtre desdites deux fenêtres consécutives étant pris en considération uniquement si aucun saut n'est détecté.

**15.** Dispositif de synchronisation (1) selon l'une quelconque des revendications 9 à 14, dans lequel ledit bloc estimateur de bruit et calculateur de seuil dynamique (4) est en outre configuré pour calculer ledit seuil (THR) en filtrant ledit bruit estimé par un filtre capable d'appliquer alternativement une constante quelconque parmi une constante de temps plus rapide et une constante de temps plus lente,
quand un bruit estimé actuellement est supérieur à un bruit estimé précédemment, ladite constante de temps plus rapide étant appliquée par ledit filtre de sorte que ledit seuil soit augmenté plus rapidement ; et
quand un bruit estimé actuellement est inférieur à un bruit estimé précédemment, ladite constante de temps plus lente étant appliquée par ledit filtre de sorte que ledit bruit soit diminué plus lentement.

**16.** Système de synchronisation (100') pour un réseau de communication, ledit système de synchronisation (100') comprenant :

un bloc comparateur de phase et de critères de sélection de paquet (2), configuré pour recevoir des horodatages relatifs à des paquets de synchronisation échangés avec un noeud maître dudit réseau de communication et pour les traiter de manière à fournir une séquence d'échantillons de délai de propagation relatifs auxdits paquets de synchronisation ;
un premier dispositif de synchronisation (1a) selon l'une quelconque des revendications 2, 4, 5, 6 et 7 ;
un deuxième dispositif de synchronisation (1b) selon l'une quelconque des revendications 9 à 15 ; et
un troisième dispositif de synchronisation (1c) selon l'une quelconque des revendications 3 à 7.

17. Système de synchronisation (100') selon la revendication 16, comprenant en outre un bloc de contrôle (6) configuré pour coordonner ledit premier dispositif de synchronisation (1a), ledit deuxième dispositif de synchronisation (1b) et ledit troisième dispositif de synchronisation (1c), ledit premier dispositif de synchronisation (1a) et ledit deuxième dispositif de synchronisation (1b) ayant une priorité supérieure à celle du troisième dispositif de synchronisation (1c).

Figure 2 (prior art)

Figure 1
(prior art)

**Figure 3**

EP 3 334 067 B1

100'

1c  1b  1a

THRa

detected
phase jumps

THRb

THRc

| 4a | | 7 | 5c | 5b | 5a | 6 |

4b
4c

jump detected &
new reference
packet set

DPLL
CTRL → to DPLL

| 2 | | 3 |

phase error
statistics
(FWD, BWD)

PE[n][fwd]
PE[n][bwd]

t2 & t3    from
local clock

t1 & t4    from
packet RX

# Figure 4

EP 3 334 067 B1

```
                          ┌─────────┐
                          │  start  │
                          └────┬────┘
                               │
                               ▼
              ┌──────────────────────────────┐
              │ divide two consecutive windows│  ─── 500
              │        in sub-windows          │
              └──────────────┬────────────────┘
                             │
                             ▼
              ┌──────────────────────────────┐
              │      calculate mean           │  ─── 501
              │     for each sub-window        │
              └──────────────┬────────────────┘
                             │
                             ▼
              ┌──────────────────────────────┐
              │   calculate linear regression  │  ─── 502
              └──────────────┬────────────────┘
                             │
                             ▼
              ┌──────────────────────────────┐
              │       calculate errors         │
              └─────────────┬────────────────┘
                          503
```

divide two consecutive windows in sub-windows — 500

calculate mean for each sub-window — 501

calculate linear regression — 502

calculate errors — 503

504 — calculate number of error sign changes

calculate squared maximum error — 505

507 — 506 — 508

jump detected

Squared maximum error > THR
&
error sign changes < maximum threshold

y          n

no jump detected

509

shift by 1 window

## Figure 5

Figure 6

EP 3 334 067 B1

Figure 7

Figure 8

EP 3 334 067 B1

EP 3 334 067 B1

start

divide samples in windows — 900

extract sub-set of Wb best samples — 901

calculate median — 902

apply IIR to median — 903

compare current IIR output with IIR output of $T_c{}^{th}$ steps ago — 904

906
jump detected

y

905
squared variation > THR

n

907
no jump detected

908
shift by 1 window

## Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010158051 A1

- WO 2015127983 A1

### Non-patent literature cited in the description

- **ILIJA HADŽIĆ et al.** A Synchronization Algorithm for Packet MANs. *IEEE Transactions On Communications,* April 2011, vol. 59 (4

- **ILIJA HADŽIĆ et al.** A Synchronization Algorithm for Packet MANs. *IEEE Transactions On Communications,* April 2011, vol. 59 (4